# EUROPEAN PATENT SPECIFICATION

(11) **EP 2 658 418 B1**
(45) Date of publication and mention of the grant of the patent: **17.04.2019**
(21) Application number: 11799730.4
(22) Date of filing: 23.12.2011
(51) Int. Cl.: A47J 27/21, C02F 1/00, C02F 9/00

(54) **COLLECTING BOWL FOR LIQUIDS OF A DEVICE FOR PROCESSING LIQUIDS**
AUFFANGSCHÜSSEL FÜR FLÜSSIGKEITEN EINER VORRICHTUNG ZUR BEHANDLUNG VON FLÜSSIGKEITEN
CUVE DE RÉCUPÉRATION POUR LIQUIDES D'UN DISPOSITIF DE TRAITEMENT DE LIQUIDES

(30) Priority: 27.12.2010 IT PD20100394
(43) Date of publication of application: 06.11.2013
(73) Proprietor: Laica S.p.A., 36021 Barbarano Vicentino (VI) (IT)
(72) Inventor: MORETTO, Maurizio, 36100 Vicenza (IT)
(74) Representative: Locas, Davide
(86) International application number: PCT/EP2011/074021
(87) International publication number: WO 2012/089695

(56) References cited:
- WO-A1-2005/056942
- WO-A1-2005/118481
- WO-A1-2008/059939
- WO-A1-2008/091750
- WO-A1-2009/015679
- WO-A1-2010/081845
- US-A- 4 772 386

## Description

The present invention relates to a collecting bowl for liquids for a device for processing liquids, in particular for percolation filtering devices which are intended to process drinking water domestically.

Similar bowls are integral components of the filtration jugs which are normally used to purify drinking water for domestic use, improving the organoleptic characteristics thereof at the same time.

It is known from WO2009/015679 and from WO2010/081845 to construct filtration jugs in which there is provided a bowl which is for collecting the water to be filtered and which is provided with an outlet opening which is normally cut off by a valve. The valve is caused to open when an appropriate filter cartridge provided with a valve actuator is inserted into the suitable seat provided in the collecting bowl. In that manner, it is possible to permit the filtration of the water in accordance with recognition of the cartridge as being suitable for the purpose for which it is selected. In the reverse case, the flow of water through the outlet opening of the collecting bowl is inhibited.

This technical solution affords the advantages of making it possible for only filter cartridges of the suitable type and quality which are provided with the necessary valve actuator to be able to be used in the jugs, thereby ensuring greater protection for the user. However, this solution necessarily requires direct physical interaction between the valve actuator and the closure member. A further solution in filtering systems provided with a valve is described in WO 2005/056942, which discloses a floor waste including a filter basket having a magnet. The magnet attracts a movable valve member upwardly from a seat until it reaches and touches the magnet, allowing liquid to pass through the seal. When the basket is removed the movable valve member falls down closing the seat. In one embodiment the valve member includes a valve disk that prevents the flow of liquid through the seat when engaged therewith. However, in all solutions according to the known art it is possible that this direct physical interaction between the valve member and the actuator, either physical or magnetic, needs to be impeded, e.g., if it is required to mount in the outlet opening filters, nets, bulkheads or other arrangements which can obstruct the insertion of the valve actuator in the outlet opening.

In that case, any use of cartridges provided with a non-suitable valve actuator could bring about permanent damage to those filters or the other arrangements interposed between the closure member and the valve actuator with consequent damage to the jug, and could destroy the filtering properties which have to be ensured for the user.

Also, more in general, the requirement for physical contact between the valve actuator and the closure member of valve involves a poor overall protection of the mechanical elements forming the valve.

The technical problem addressed by the present invention is to provide a bowl for collecting liquids which is structurally and functionally configured to allow all the disadvantages set out above with reference to the prior art cited to be overcome.

This problem is solved by the invention by means of a collecting bowl for liquids constructed in accordance with the appended claims.

The features and advantages of the invention will be better appreciated from the detailed description of some preferred but non-exclusive embodiments thereof which are illustrated by way of non-limiting example with reference to the appended drawings, in which:
- Figure 1 is a cross-section which schematically illustrates the main components of a percolation filtering device which is intended for the domestic processing of drinking water;
- Figure 2 is a partially sectioned view of a bowl for collecting liquids of the percolation filtering device of Figure 1;
- Figure 3 is a cross-section, drawn to an enlarged scale, of a detail of Figure 2;
- Figure 4 is a schematic view of the device of Figure 3 in an operating functional step;
- Figure 5 is a partially sectioned view of a second embodiment of a collecting bowl of this invention;
- Figure 6 is a cross-section, drawn to an enlarged scale, of a detail of Figure 5;
- Figure 7 is a partially sectioned view of a third embodiment of a collecting bowl of this invention;
- Figures 8 and 9 are two cross-sections of two different embodiments of a filter cartridge to be used in a collecting bowl according to this invention;
- Figures 10A and 10B are two cross-sections of an adaptor for replaceable filter cartridges and a cartridge provided with such an adaptor, respectively;
- Figures 11 to 14 are cross-sections of four different embodiments of a fitting for controlling the opening of the valve for cutting off a collecting bowl according to this invention.

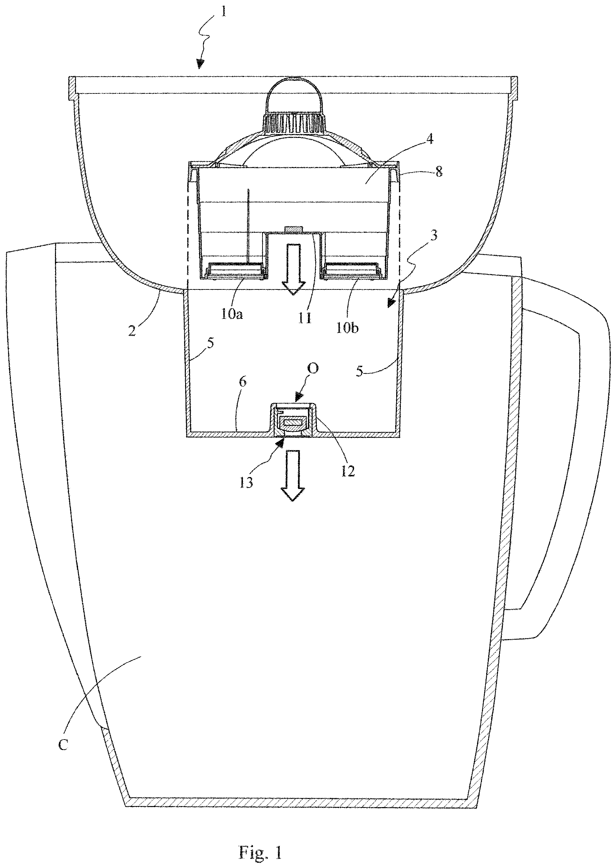

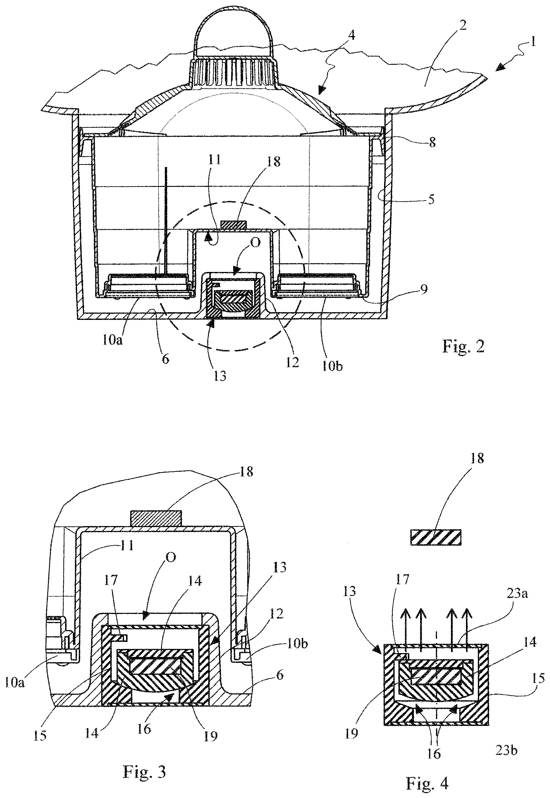

With initial reference to Figure 1, there is generally designated 1 a collecting bowl for liquids of a percolation filtering device of the type comprising a jug body C which is intended for the domestic processing of drinking water. Then with reference to Figures 2 to 4, the part of that bowl which can particularly be seen includes a bottom wall 2, in which a chamber-like seat 3 is formed. A replaceable filter cartridge 4 is removably inserted from above in the seat 3. The seat 3 has a side wall 5 and a bottom wall 6. The cartridge 4 is provided with a shell, inside which a layer of filtration material which is not illustrated is contained. The shell circumferentially has a lip-like seal 8 which, with the cartridge inserted in the operating position, is moved in a sealing manner against the side wall 5, in the region of the opening of the seat 3.

The cartridge 4 is also provided in a bottom 9 thereof with portions which are each provided with an outlet opening 10a, 10b, respectively, which are separated by a recess 11. When the cartridge is inserted into the seat 3, the recess 11 receives with great lateral play a tubular attachment 12 which extends from the bottom wall 6 which defines an outlet opening O of the collecting bowl 1. As better illustrated in Figures 2 to 4, there is inserted into the attachment 12 a valve 13 with a valve body 15 in the form of a tubular metal tube which defines a valve seat 16 which is normally closed by a closure member 14 owing to gravitational force. A shoulder 17 limits the movement of the closure member 14 between the closed position on the valve seat 16 (Figures 2 and 3) and an open position (Figure 4). More precisely, the shoulder 17 allows to limit the stroke of the closure member 14 in the valve body 15, so that a gap between the cartridge 4 and the closure member 14 is always defined both in the closed and in the open position. The shoulder 17 or any other suitable stroke limiting element allows to avoid any contact between the closure member and the cartridge and, consequently, to use a means for protecting the outlet opening 23a, such as nets, barriers or similar devices having a two-fold function, and prevent access to the closure member 14 and prevent tampering. Furthermore, the protecting means retains any residues of filtration material discharged from the cartridge 4 The closure member 14 is normally maintained in the closed position and is urged to move into the open position when a suitable filter cartridge 4 is inserted into the seat 3, and is therefore recognised as being suitable for the opening of the valve 13, permitting the function of the filter device. A filter cartridge 4 is recognised as being suitable if it is provided with a magnetic valve actuator, in the present embodiment a ferromagnetic element 18, or more generally an element which is subjected to magnetic attraction and which is capable of co-operating with a second magnetic element having a permanent magnet 19 which is let into the closure member 14. It is logically possible to transpose the positions of the two magnetic elements by placing the permanent magnet on the cartridge 4 and the ferromagnetic element in the closure member 14, although the proposed configuration is preferred. In all cases, a magnetic attraction force is generated between the two elements 18, 19 and moves the closure member 14 behind the shoulder 17, releasing the valve seat 16 and consequently the flow of filtered liquid out of the collecting bowl 1. In other words, the opening of the closure member 14 takes place when the reciprocal position of the two elements 18, 19 is sufficient to generate a magnetic attraction force sufficient to open the closure member or, in other words, to bring about remote control for opening the closure member.

It should also be noted that means for protecting the outlet opening 23b such as nets, barriers or similar devices having a two-fold function can also be applied to the ends of the valve body 15 opposite to cartridge 4.

If desired, the outlet opening of the filtered fluid could be constructed in the form of a calibrated hole in order to adjust the flow of water being discharged from the bowl and consequently to adapt the flow being conveyed through the filtering layer of the cartridge 4. In this case, in order to obtain a suitable path for the liquid filter by the cartridge, the cartridge provided with two lateral appendixes in the bottom thereof. The filtered water flows from the lateral appendixes in the seat and reaches the valve.

In this case, one of the magnetic elements is advantageously placed in a recess defined in the bottom of the cartridge between the two lateral appendixes.

According to a preferred embodiment, the magnetic element 18 of the valve actuator is housed inside an external casing of the filter cartridge 4 in order to protect the magnet and avoid unintentional removal thereof.

Furthermore, in order to avoid also possible damages to closure member, the magnetic element 19 thereof is housed in a plastic casing completely surrounding the closure member 14, as can be seen in figure 4. This is in particular advantageous in domestic water filtering wherein it is remarkably important to avoid any contact between water and magnets and, more in general, metallic elements.

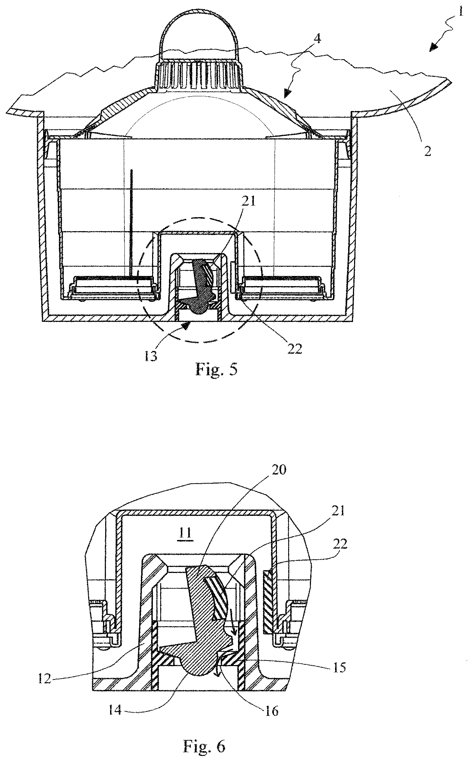

In a second embodiment of the invention, illustrated with reference to the Figures 5 and 6, the closure member 14 is provided with an operating arm 20 which carries a permanent magnet 21. More precisely, the arm 20 projects from a base resting on a bottom surface of the valve body 15 when the passage is closed. By means of the oscillation of the closure member 14, the base is lifted from the bottom surface thus allowing the flow of filtered water.

The other magnetic element 22 is also constituted in that case by a permanent magnet which is applied to the side wall 22 of the recess 11. The magnetic action may be both attractive, if opposite poles of the magnets face each other, and repulsive, if the magnets face each other with identical poles. In any case, the magnetic action will produce a couple on the closure member 14 which brings about the oscillation thereof in the valve seat 16 with resultant opening thereof.

This solution allows to avoid the up and down movement of the closure member and accordingly to better control the flow of liquid through the valve, while, at the same time, it improves the reliability of the valve, eliminating the risk that the closure member remains jammed in the open or closed position along its stroke.

In the embodiments described up to now, the valve actuator is associated with the cartridge 4, the magnetic element 18 being fixed thereto, but there may also be provided different solutions, in which the magnetic element is supported on suitable fittings, which are also structurally independent and removable from the bowl.

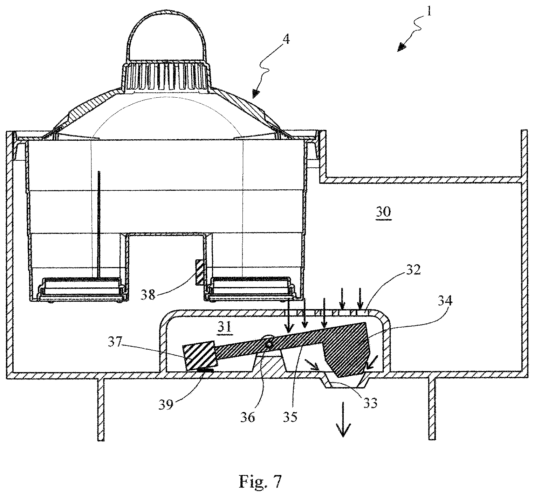

In particular, in a third embodiment of the invention, illustrated in Figure 7, the seat 3 for receiving the cartridge 4 is open in a chamber 30 in which a cavity 31 which is accessible through a grill 32 is formed. There is formed in the cavity 31 the outlet opening 33 from the collecting bowl, which opening 33 constitutes the valve seat which is normally closed by a closure member 34. The closure member 34 is actuated by means of an arm 35 which is articulated at the pin 36 in order to form a lever of the first type. The arm 35 is provided, at the side opposite the closure member 34, with a permanent magnet 37 and is urged by a helical spring 39 so as to maintain the closure member 34 in a state closing the seat 33.

A second magnetic element 38 is mounted on the cartridge 4 in a position so that, when the cartridge is inserted in the seat 3, the first and second magnets are located in a position close together. In that manner, when the cartridge 4 is inserted in the seat 3, the closure member 34 is opened by the effect of interaction between the magnetic elements 37, 38.

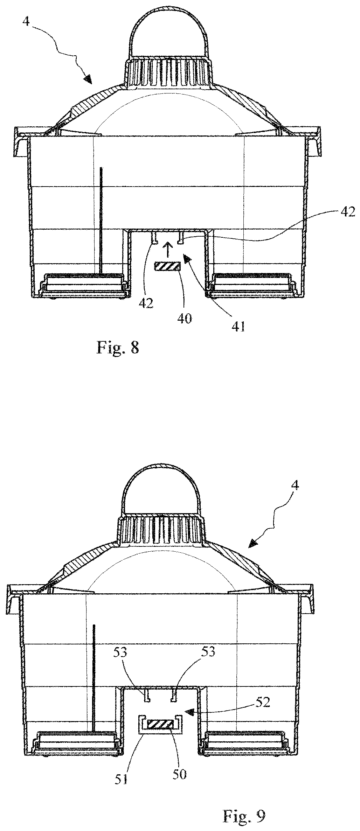

A fourth and a fifth embodiment of the invention are shown in Figures 8 and 9, respectively.

Those examples are given with reference only to the system for fixing the magnetic element to the cartridge and are particularly but not only applicable to the example of a collecting bowl of Figures 1 to 4.

In the first case (Figure 8), a magnetic element 40 is secured to the cartridge, optionally in a removable manner so as to be able to be recovered during replacement of the cartridge 4 itself, by means of a snap-fit coupling 41 including two L-like hooks 42 with facing concavity.

In the second case, a magnetic element 50 is applied to a support 51 which is secured in a sliding manner or snap-fitted to a coupling 52 which is similar to that of the preceding Figure but which has hooks 53 with facing convexity. These solutions advantageously allow the magnetic element to be removed from an exhausted cartridge and to be fixed to the new one.

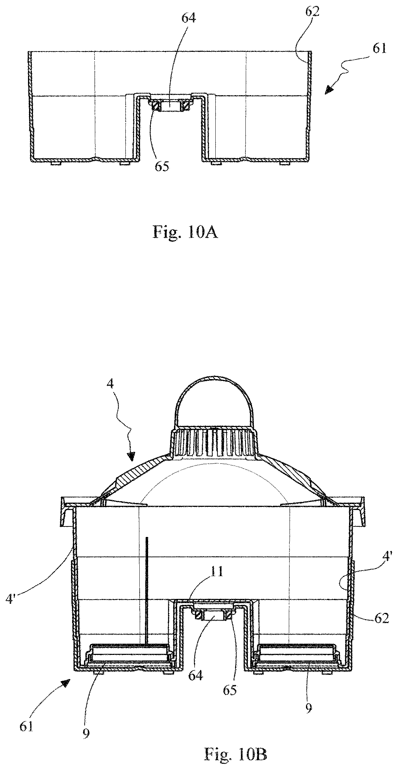

A sixth embodiment of arrangements relating to the construction of the filter cartridge is illustrated in the Figures 10A and 10B.

Figure 10A illustrates an adaptor 61 for equipping a conventional filter cartridge 4 in use in the bowl 1 of this invention. The adaptor 61 comprises a beaker-like shell 62 which is configured so as to correspond to the lateral outer surface of the cartridge 4' in order to be able to be fixedly joined thereto, with it being maintained slightly spaced apart from the bottom 9 of the cartridge and the wall of the recess 11 (Figure 10B) so as to allow the flow of the filtered fluid out of the cartridge 4 and to convey it towards an opening 64 of tubular shape, to the exterior of which a magnetic element 65 (ferromagnetic element or permanent magnet element as necessary as set out above) which is functionally similar to the ferromagnetic element 18 of Figure 2 is applied. With this adaptor, it is very easy to adapt conventional filter cartridges to use in the collecting bowl 1 of this invention. The shell 62 may be fitted in a sealing manner by being forced onto the outer surface of the cartridge 4 or welded or adhesively-bonded thereto. Therefore, it will be appreciated how insertion of the cartridge 4 provided with the adaptor 61 into the bowl 1 brings about opening of the valve 13 because the position of the magnetic element 65 is such that the positioning of the cartridge in the suitable seat generates a force of magnetic attraction which is sufficient to open the closure member.

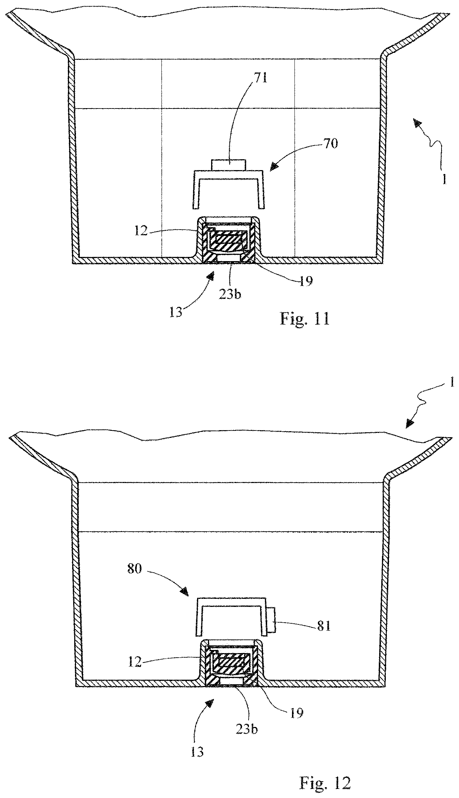

The fittings which are intended for the collecting bowl 1 and which are illustrated in Figures 11 to 14 are conceptually and functionally similar.

The fittings 70 and 80 illustrated by way of example in Figures 11 and 12 have a cap-like shape and are intended to be fitted on the tubular attachment 12 with a magnetic element (ferromagnetic or permanent) 71, 81 which is applied to the upper wall or the side wall of the cap, respectively.

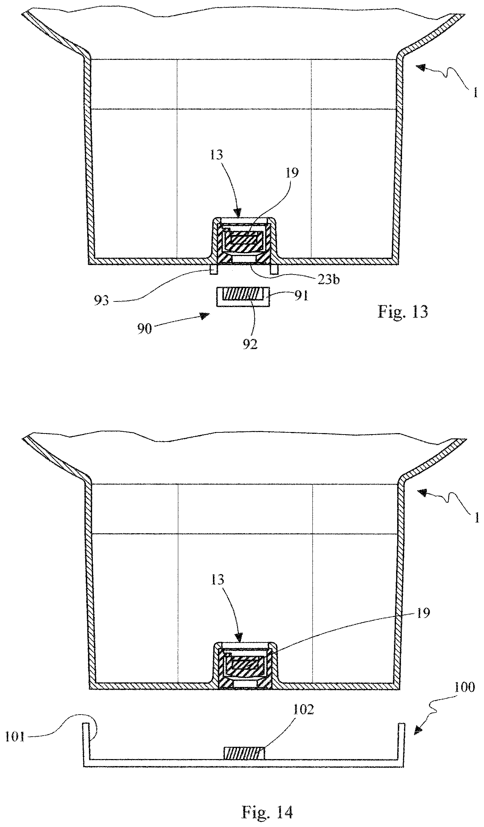

The embodiments of Figures 13 and 14 which are designated 90 and 100 may be used at the opening of the outlet opening of the attachment 12 from the collecting bowl 1, respectively, by means of a cylindrical cup 91 which carries the magnetic element 92 with a repulsive function with respect to the magnet 19 of the closure member and which is applied to counter-members 93, or by means of a shell 101 which carries the magnetic element 102 and which is applied to the bottom wall 6 of the seat 3, at the outer side thereof. In both cases, the cup 91 and the shell 101 are perforated and/or provided with openings for the passage of the filtered water.

## Claims

1. A collecting bowl (1) for liquids of a device for processing liquids comprising an outlet opening (O) and a valve (13) for cutting off the outlet opening (O), wherein the valve (13) comprises a normally closed closure member (14) for cutting off the outlet opening (O) when the collecting bowl (1) is fitted in an operating position in the device for processing liquids, and further comprising a valve actuator (4) for opening the closure member (14) when the valve actuator is connected to the valve, and a first and a second magnetic element (18, 19) which are mounted on the closure member (14) and on the valve actuator (4), respectively, or vice versa, and which are capable of mutual magnetic interaction for remote control of the opening of the closure member (14), by means of moving it within a valve body (15), wherein the valve body (15) comprises a stroke limiting element (17) which is capable of limiting the stroke of the closure member (14) within the valve body (15) in such a way that it is always defined a gap between the valve actuator (4) and the closure member (14) both in the closed and in the open position of the closure member (14).

2. A collecting bowl (1) according to claim 1, wherein the valve actuator (4) is structurally independent and is releasably associated with a structure of the bowl (1).

3. A collecting bowl (1) according to claim 1 or 2, wherein protection means (23a) for preventing direct access to the valve are provided in the region of the outlet opening (O) upstream of the valve (13), the gap between the valve actuator (4) and the closure member (14) being defined in the region of the outlet opening (O).

4. A collecting bowl (1) according to any of the preceding claims, wherein stroke limiting element (17) comprises a shoulder provided in a passage of the valve body (15) for slidingly housing the closure member (14) therein.

5. A collecting bowl (1) according to claim 3 and 4, wherein the shoulder (17) is provided downstream of the protection means (23a).

6. A collecting bowl (1) according to any of the preceding claims, wherein protection means (23b) for preventing direct access to the valve are provided in the region of the outlet opening (O) downstream of the valve (13).

7. A collecting bowl (1) according to any of the preceding claims, wherein the magnetic element (19) of the closure member (14) is housed in a plastic casing completely surrounding the closure member (14).

8. A collecting bowl according to any of the preceding claims, comprising a seat (3) for receiving a filter cartridge (4), in which the cartridge is releasably inserted and carries the valve actuator.

9. A collecting bowl according to claim 6, wherein the magnetic element (18) of the valve actuator is housed inside an external casing of the filter cartridge (4).

10. A collecting bowl (1) according to claim 8 or 9, wherein one of the magnetic elements is placed in a recess defined in the bottom of the cartridge (4) between two lateral appendixes thereof.

11. A collecting bowl (1) according to any of claims 7 to 10, wherein one of the magnetic elements is releasably associated with the cartridge (4).

12. A collecting bowl (1) according to claim 11, wherein the releasable association comprises a snap-fit coupling (41; 52).

13. A collecting bowl (1) according to any of claims 1 to 12, wherein both the magnetic elements are permanent magnets.

14. A collecting bowl (1) according to any of claims 1 to 12, wherein one of the magnetic elements is a permanent magnet and the other of the magnetic elements is of the ferromagnetic type.

15. A percolation filtering device including a collecting bowl (1) according to any of claims 1 to 14.

## Patentansprüche

1. Auffangschale (1) für Flüssigkeiten einer Vorrichtung zur Verarbeitung von Flüssigkeiten, die eine Auslassöffnung (O) und ein Ventil (13) zum Trennen der Auslassöffnung (O) aufweist, wobei das Ventil (13) ein normal geschlossenes Verschlusselement (14) zum Trennen der Auslassöffnung (O) aufweist, wenn die Auffangschale (1) in eine Betätigungsposition in der Vorrichtung zum Verarbeiten von Flüssigkeiten eingepasst ist, und ferner ein Ventilaktuator (4) zum Öffnen des Verschlusselementes (14) aufweist, wenn der Ventilaktuator mit dem Ventil verbunden ist, und ein erstes und ein zweites magnetisches Element (18, 19) aufweist, die jeweils am Verschlusselement (14) und am Ventilaktuator (4), oder umgekehrt, befestigt sind, und die zur gegenseitigen magnetischen Wechselwirkung zur Fernsteuerung der Öffnung des Verschlusselementes (14) durch eine Bewegung innerhalb eines Ventilkörpers (15) in der Lage sind, wobei der Ventilkörper (15) ein Hubbegrenzungselement (17) aufweist, das in der Lage ist, den Hub des Verschlusselements (14) innerhalb des Ventilkörpers (15) derart zu begrenzen, dass immer eine Aussparung zwischen dem Ventilaktuator (4) und dem Verschlusselement (14) sowohl in der geschlossenen als auch in der offenen Position des Verschlusselements (14) gebildet wird.

2. Auffangschale (1) nach Anspruch 1, wobei der Ventilaktuator (4) strukturell unabhängig ist und lösbar einer Struktur der Schale (1) zugeordnet ist.

3. Auffangschale (1) nach Anspruch 1 oder 2, wobei Schutzeinrichtungen (23a) zum Verhindern eines direkten Zugangs zum Ventil im Bereich der Austrittsöffnung (O) stromaufwärts des Ventils (13) vorgesehen sind, wobei die Aussparung zwischen dem Ventilaktuator (4) und dem Verschlusselement (14) im Bereich der Austrittsöffnung (O) ausgebildet ist.

4. Auffangschale (1) nach einem der vorhergehenden Ansprüche, wobei das Hubbegrenzungselement (17) eine Schulter aufweist, die in einem Durchgang des Ventilkörpers (15) zum gleitenden Aufnehmen des Schließelements (14) darin vorgesehen ist.

5. Auffangschale (1) nach Anspruch 3 und 4, wobei die Schulter (17) stromabwärts der Schutzeinrichtungen (23a) vorgesehen ist.

6. Auffangschale (1) nach einem der vorhergehenden Ansprüche, wobei Schutzeinrichtungen (23b) zum Verhindern eines direkten Zugangs zum Ventil im Bereich der Austrittsöffnung (O) stromabwärts des Ventils (13) vorgesehen sind.

7. Auffangschale (1) nach einem der vorhergehenden Ansprüche, wobei das Magnetelement (19) des Schließelements (14) in einem Kunststoffgehäuse aufgenommen ist, das das Schließelement (14) vollständig umgibt.

8. Auffangschale nach einem der vorhergehenden Ansprüche mit einem Sitz (3) zur Aufnahme einer Filterkartusche (4), in dem die Kartusche lösbar eingesetzt ist und den Ventilaktuator trägt.

9. Auffangschale nach Anspruch 6, wobei das Magnetelement (18) des Ventilaktuators innerhalb eines äußeren Gehäuses der Filterkartusche (4) aufgenommen ist.

10. Auffangschale (1) nach Anspruch 8 oder 9, wobei eines der magnetischen Elemente in einer Aussparung angeordnet ist, die im Boden der Kartusche (4) zwischen zwei zugehörigen seitlichen Fortsätzen ausgebildet ist.

11. Auffangschale (1) nach einem der Ansprüche 7 bis 10, wobei eines der magnetischen Elemente der Kartusche (4) lösbar zugeordnet ist.

12. Auffangschale (1) nach Anspruch 11, wobei die lösbare Zuordnung eine Schnappverbindung (41; 52) aufweist.

13. Auffangschale (1) nach einem der Ansprüche 1 bis 12, wobei beide magnetischen Elemente Permanentmagnete sind.

14. Auffangschale (1) nach einem der Ansprüche 1 bis 12, wobei eines der magnetischen Elemente ein Permanentmagnet ist und das andere der magnetischen Elemente der ferromagnetische Typ ist.

15. Perkolationsfiltervorrichtung mit einer Auffangschale (1) nach einem der Ansprüche 1 bis 14.

## Revendications

1. Cuvette de collecte (1) pour liquides d'un dispositif de traitement de liquides comprenant une ouverture de sortie (O) et une vanne (13) pour fermer l'ouverture de sortie (O), dans laquelle la vanne (13) comprend un organe de fermeture (14) normalement fermé pour fermer l'ouverture de sortie (O) lorsque la cuvette de collecte (1) est ajustée dans une position de fonctionnement dans le dispositif de traitement de liquides, et comprenant en outre un actionneur de vanne (4) pour ouvrir l'organe de fermeture (14) lorsque l'actionneur de vanne est relié à la vanne, et un premier et un second élément magnétique (18, 19) qui sont montés sur l'organe de fermeture (14) et sur l'actionneur de vanne (4), respectivement, ou vice versa, et qui sont capables d'une interaction magnétique mutuelle pour la commande à distance de l'ouverture de l'organe de fermeture (14) au moyen de son déplacement à l'intérieur d'un corps de vanne (15), dans lequel le corps de vanne (15) comprend un élément de limitation de course (17) qui est capable de limiter la course de l'organe de fermeture (14) à l'intérieur du corps de vanne (15) de telle manière qu'il est toujours défini un espacement entre l'actionneur de vanne (4) et l'organe de fermeture (14) à la fois dans la position fermée et dans la position ouverte de l'organe de fermeture (14).

2. Cuvette de collecte (1) selon la revendication 1, dans laquelle l'actionneur de vanne (4) est structuralement indépendant et est associé de manière libérable à une structure de la cuvette (1).

3. Cuvette de collecte (1) selon la revendication 1 ou 2, dans laquelle des moyens de protection (23a) pour empêcher l'accès direct à la vanne sont prévus dans la région de l'ouverture de sortie (O) en amont de la vanne (13), l'espacement entre l'actionneur de vanne (4) et l'organe de fermeture (14) étant défini dans la région de l'ouverture de sortie (O).

4. Cuvette de collecte (1) selon l'une quelconque des revendications précédentes, dans laquelle l'élément de limitation de course (17) comprend un épaulement prévu dans un passage du corps de vanne (15) pour accueillir de manière coulissante l'organe de fermeture (14) dans celui-ci.

5. Cuvette de collecte (1) selon la revendication 3 et 4, dans laquelle l'épaulement (17) est prévu en aval des moyens de protection (23a).

6. Cuvette de collecte (1) selon l'une quelconque des revendications précédentes, dans laquelle des moyens de protection (23b) pour empêcher un accès direct à la vanne sont fournis dans la région de l'ouverture de sortie (O) en aval de la vanne (13).

7. Cuvette de collecte (1) selon l'une quelconque des revendications précédentes, dans laquelle l'élément magnétique (19) de l'organe de fermeture (14) est accueilli dans un boîtier en plastique entourant complètement l'organe de fermeture (14).

8. Cuvette de collecte selon l'une quelconque des revendications précédentes, comprenant un siège (3) pour recevoir une cartouche filtrante (4), dans lequel la cartouche est insérée de manière libérable et supporte l'actionneur de vanne.

9. Cuvette de collecte selon la revendication 6, dans laquelle l'élément magnétique (18) de l'actionneur de vanne est accueilli dans un boîtier externe de la cartouche filtrante (4).

10. Cuvette de collecte (1) selon la revendication 8 ou 9, dans laquelle l'un des éléments magnétiques est placé dans un évidement défini dans le fond de la cartouche (4) entre deux appendices latéraux de celle-ci.

11. Cuvette de collecte (1) selon l'une quelconque des revendications 7 à 10, dans laquelle l'un des éléments magnétiques est associé de manière libérable à la cartouche (4).

12. Cuvette de collecte (1) selon la revendication 11, dans laquelle l'association libérable comprend un couplage à ajustement par pression (41 ; 52).

13. Cuvette de collecte (1) selon l'une quelconque des revendications 1 à 12, dans laquelle les deux éléments magnétiques sont des aimants permanents.

14. Cuvette de collecte (1) selon l'une quelconque des revendications 1 à 12, dans laquelle l'un des éléments magnétiques est un aimant permanent et l'autre des éléments magnétiques est du type ferromagnétique.

15. Dispositif de filtrage par percolation comprenant une cuvette de collecte (1) selon l'une quelconque des revendications 1 à 14.
